# EUROPEAN PATENT SPECIFICATION

(11) **EP 4 428 972 B1**
(45) Date of publication and mention of the grant of the patent: **12.08.2026**
(21) Application number: 23860918.4
(22) Date of filing: 31.08.2023
(51) Int. Cl.: H01M 10/04, H01M 50/403, H01M 50/46, B01D 67/00, H01M 10/058, H01M 10/052, H05H 1/24

(54) **PLASMA PROCESSING APPARATUS AND LAMINATION SYSTEM FOR SECONDARY BATTERY INCLUDING THE SAME**
PLASMAVERARBEITUNGSVORRICHTUNG UND LAMINIERUNGSSYSTEM FÜR SEKUNDÄRBATTERIE JENE ENTHALTEND
APPAREIL DE TRAITEMENT AU PLASMA ET SYSTÈME DE STRATIFICATION POUR BATTERIE SECONDAIRE LE COMPRENANT

(30) Priority: 02.09.2022 KR 20220111700
(43) Date of publication of application: 11.09.2024
(73) Proprietor: LG Energy Solution, Ltd., Seoul 07335 (KR)
(72) Inventor: LEE, Sang-Kyun, Daejeon 34122 (KR); LEE, Yong-Tae, Daejeon 34122 (KR); LEE, Hun-Hyeong, Daejeon 34122 (KR); HAN, Man-Woong, Daejeon 34122 (KR)
(74) Representative: Plasseraud IP
(86) International application number: PCT/KR2023/013012
(87) International publication number: WO 2024/049243

(56) References cited:
- EP-A1- 3 735 110
- JP-A- H08 195 202
- JP-A- H10 309 749
- KR-A- 20180 005 472
- KR-A- 20180 039 452
- KR-A- 20180 039 452
- KR-A- 20180 128 757
- KR-A- 20220 058 249
- US-A1- 2011 259 730

## Description

### TECHNICAL FIELD

The present disclosure relates to a plasma processing apparatus and a lamination system for a secondary battery including the same, and more particularly, to a plasma processing apparatus for improving wettability by adjusting an adhesive force between a separator and an electrode and a lamination system for a secondary battery including the plasma processing apparatus.

The present application claims priority to Korean Patent Application No. 10-2022-0111700 filed on September 2, 2022 in the Republic of Korea.

### BACKGROUND ART

In general, secondary batteries refer to batteries that may be charged and discharged, unlike primary batteries that may not be charged. Secondary batteries are widely used in the field of advanced electronic devices such as phones, laptop computers, and camcorders.

Secondary batteries are classified into cylindrical secondary batteries in which an electrode assembly is placed in a metal can, pouch-type secondary batteries in which an electrode assembly is placed in a pouch, and prismatic secondary batteries. A pouch-type secondary battery includes an electrode assembly, an electrolyte, a pouch in which the electrode assembly and the electrolyte are accommodated. In the electrode assembly, a positive electrode and a negative electrode are located with the separator therebetween, an electrode tab is attached to each of the positive electrode and the negative electrode, and an electrode lead is coupled to the electrode tab.

In the pouch-type secondary battery, a lamination process is performed to increase adhesion of the electrode assembly in which the electrode and the separator are stacked.

However, in a conventional polymer cell manufacturing process, because bi-cells are laminated at a constant temperature/pressure for better process efficiency, wettability at an interface between an electrode and a separator is lowered.

That is, when an adhesive force at the interface between the electrode and the separator is constant and the electrode and the separator are completely uniformly adhered to each other as a whole, an electrolyte may not easily permeate between the electrode and the separator and thus, a secondary battery may not perform full performance.

In particular, under the same process conditions, because the adhesive force at the interface between the positive electrode and the separator is stronger, wettability tends to be more lowered. For this reason, the performance of the secondary battery is degraded more seriously.

Also, when the adhesive force at the interface between the electrode and the separator is uniformly high as above, gas generated in a formation process performed during a secondary battery manufacturing process may not be smoothly discharged. When the gas is not smoothly discharged smoothly, lithium plating may occur.

EP 3 735 110 A1 discloses a plasma generating apparatus for a secondary battery.

### DISCLOSURE

### Technical Problem

The present disclosure is designed to solve the problems of the related art, and therefore the present disclosure is directed to providing a plasma processing apparatus for improving wettability of an electrolyte by ensuring that there is an area having a weak adhesive force between an electrode and a separator or not bonded in a unit cell used in secondary battery manufacturing, and a lamination system for a secondary battery including the plasma processing apparatus.

The present disclosure is also directed to providing a plasma processing apparatus for minimizing lithium plating by guiding smooth discharge of gas of a unit cell, and a lamination system for a secondary battery including the plasma processing apparatus.

However, the technical problems to be solved by the present disclosure are not limited thereto, and other unmentioned technical problems will be understood by one of ordinary skill in the art from the following description of the present disclosure.

### Technical Solution

The invention is defined by appended claim 1. In one aspect of the present disclosure, a plasma processing apparatus for manufacture of a unit cell for a secondary battery includes a discharge roller configured to transport a separator of the unit cell for a secondary battery and including a metal member therein, and a plasma processing member configured to generate plasma through a mutual reaction with the metal member and irradiate the plasma to a surface of the separator, wherein a pattern portion having a certain stepped portion is formed on an outer surface of the discharge roller.

Preferably, the pattern portion may include a contact portion closely in close contact with the separator when the separator is transported, and a non-contact portion having a height difference corresponding to a certain depth from the contact portion and spaced apart from the separator by a certain distance.

Preferably, when plasma of the plasma processing member is irradiated, an adhesive area may be formed on a surface of the separator located on the contact portion, and a non-adhesive area may be formed on a surface of the separator located on the non-contact portion.

Preferably, the pattern portion may include a connecting portion that connects the contact portion to the non-contact portion.

Preferably, the contact portion and the non-contact portion may be alternately arranged on the outer surface of the discharge roller.

Preferably, the contact portion and the non-contact portion may be provided in at least one of a longitudinal direction and a width direction of the discharge roller.

Preferably, the non-contact portion may be recessed to a certain depth from the outer surface of the discharge roller.

Preferably, a recess depth of the non-contact portion may be 2 mm.

The pattern portion includes a plurality of patterns having different lengths or widths.

Preferably, the plurality of patterns may have different recess depths.

Preferably, the pattern portion may be provided in a mosaic shape.

In another aspect of the present disclosure, a lamination system for a secondary battery includes the plasma processing apparatus

### Advantageous Effects

According to various embodiments of the present disclosure, there may be provided a plasma processing apparatus for improving wettability of an electrolyte by ensuring that there is an area having a weak adhesive force between an electrode and a separator or not bonded in a unit cell used in secondary battery manufacturing, and a lamination system for a secondary battery including the plasma processing apparatus.

Also, according to various embodiments of the present disclosure, there may be provided a plasma processing apparatus for minimizing lithium plating by guiding smooth discharge of gas of a unit cell, and a lamination system for a secondary battery including the plasma processing apparatus.

In addition, various other additional effects may be achieved by various embodiments of the present disclosure. The present disclosure may have various other effects, which will be described in each embodiment, or descriptions of effects that may be easily inferred by one of ordinary skill in the art will be omitted.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIGS. 1 and 2 are views illustrating a unit cell for a secondary battery according to an embodiment of the present disclosure.
FIGS. 3 and 4 are views illustrating a positive electrode and a negative electrode applied to a unit cell for a secondary battery according to an embodiment of the present disclosure.
FIG. 5 is a schematic view illustrating a lamination system for a secondary battery for manufacturing a unit cell for a secondary battery according to an embodiment of the present disclosure.
FIG. 6 is a view illustrating a plasma processing apparatus of the lamination system for a secondary battery of FIG. 5.
FIG. 7 is a schematic perspective view illustrating the plasma processing apparatus of FIG. 6.
FIG. 8 is a schematic perspective view illustrating a state where a separator passes through the plasma processing apparatus of FIG. 6.
FIG. 9 is a cross-sectional view illustrating a main portion of the plasma processing apparatus of FIG. 8.
FIG. 10 is a view for describing a plasma processing apparatus according to another embodiment of the present disclosure.
FIG. 11 is a view for describing an adhesive force measurement test through a plasma processing apparatus according to an embodiment of the present disclosure.
FIGS. 12 to 15 are views for describing a result of the adhesive force measurement test of FIG. 11.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the description proposed herein is just a preferable example for the purpose of illustrations only, not intended to limit the scope of the present disclosure.

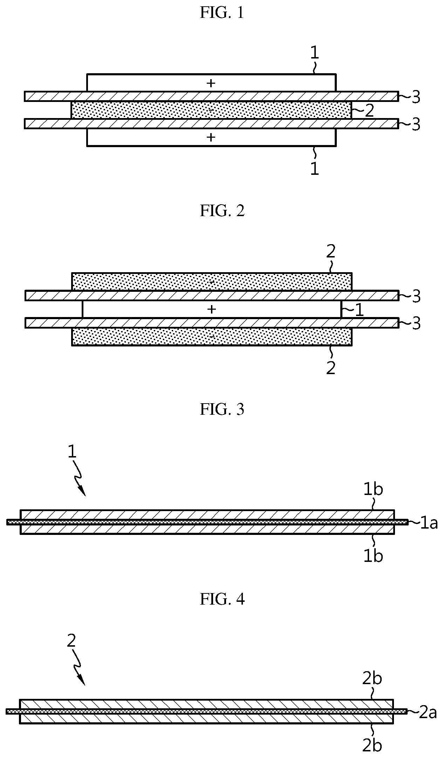

FIGS. 1 and 2 are views illustrating a unit cell for a secondary battery according to an embodiment of the present disclosure. FIGS. 3 and 4 are views illustrating a positive electrode and a negative electrode applied to a unit cell for a secondary battery according to an embodiment of the present disclosure.

Referring to FIGS. 1 to 4, a unit cell for a secondary battery according to an embodiment of the present disclosure includes a central electrode having a first polarity, a pair of separators 3 respectively laminated on both surfaces of the central electrode, and an upper electrode and a lower electrode respectively laminated on the pair of separators and having a second polarity opposite to the first polarity.

A unit cell in which outermost electrodes have the same polarity is generally called a bi-cell.

Such a bi-cell type unit cell may be divided into a positive electrode type bi-cell in which an upper electrode and a lower electrode are positive electrodes 1 and a central electrode is a negative electrode 2 as shown in FIG. 1, and a negative electrode type bi-cell in which an upper electrode and a lower electrode are negative electrodes 2 and a central electrode is a positive electrode 1 as shown in FIG. 2.

A secondary battery configured by using such a bi-cell may have a structure in which a positive electrode type bi-cell and a negative electrode type bi-cell are alternately stacked with a separator therebetween. Such bi-cells may be stacked by using a simple stacking method, a stacking and folding method, etc.

The positive electrode 1 applied to the unit cell for a secondary battery according to an embodiment of the present disclosure includes a positive electrode current collector 1a and a positive electrode active material 1b laminated on a surface of the positive electrode current collector 1a as shown in FIG. 3.

The positive electrode current collector 1a may be a foil formed of aluminum, nickel, or a combination thereof.

The positive electrode active material 1b may be any of common positive electrode active materials available as a positive electrode of a secondary battery in the art, and examples of the positive electrode active material 1b may include, but are not limited to, LiCoO₂, LiNiO₂, LiMnO₂, LiMn₂O₄, Li(NiaCobMnc)O₂ (0 < a < 1, 0 < b < 1, a + b + c = 1), LiNi₁-YCoYO₂, LiCo₁-YMnYO₂, LiNi₁-YMnYO₂ (where 0 ≤ Y < 1), Li(NiaCobMnc)O₄ (0 < a < 2, 0 < b < 2, a + b + c = 2), LiMn₂-ZNiZO₄, LiMn₂-ZCoZO₄ (where 0 < Z < 2), LiCoPO₄, LiFePO₄, and a mixture thereof.

Also, the negative electrode 2 applied to the unit cell for a secondary battery according to an embodiment of the present disclosure includes a negative electrode current collector 2a and a negative electrode active material 2b laminated on a surface of the negative electrode current collector 2a as shown in FIG. 4.

The negative electrode current collector 2a may be a foil formed of stainless steel, nickel, copper, titanium, or an alloy thereof.

The negative electrode active material 2b may be any of common negative electrode active materials available as a negative electrode of a secondary battery in the art, and examples of the negative electrode active material 2b may include, but are not limited to, carbon such as hard graphitized carbon or graphite-based carbon; metal composite oxides such as LixFe₂O₃ (0 ≤ x ≤ 1), LixWO; (0 ≤ x ≤ 1), and SnxMe1-xMe'yOz (Me: Mn, Fe, Pb, Ge; Me': Al, B, P, Si, Group 1, 2, and 3 elements in the periodic table, halogen; 0 < x ≤ 1; 1 ≤ y ≤ 3; 1 ≤ z ≤ 8); lithium metals; lithium alloys; silicon-based alloys; tin-based alloys; oxides such as SnO, SnO₂, PbO, PbO₂, Pb₂O₃, Pb₃O₄, Sb₂O₃, Sb₂O₄, Sb₂O₅, GeO, GeO₂, Bi₂O₃, Bi₂O₄, or Bi₂O₅; conductive polymers such as polyacetylene; and Li-Co-Ni-based materials.

The separator 3 located between the positive electrode 1 and the negative electrode 2 may include a porous coating layer formed on one surface or both surfaces of a porous polymer substrate.

The porous polymer substrate used in the separator 3 is not particularly limited as long as it is a planar porous polymer substrate that is usually applied to a secondary battery. The porous polymer substrate may be in the form of a film or a nonwoven fabric.

The porous coating layer is formed on one surface or both surfaces of the porous polymer substrate, inorganic particles are connected and fixed by a binder polymer for the porous coating layer, and pores in a micrometer size are formed in the porous coating layer due to an interstitial volume between the inorganic particles. The binder polymer for the porous coating layer is not particularly limited as long as it has an excellent bonding strength with the inorganic particles and is not easily dissolved by an electrolyte.

In the unit cell for a secondary battery according to an embodiment of the present disclosure, an adhesive force is not uniformly formed but a patterned adhesive force is formed, at an interface between the positive electrode 1 and the separator 3 and/or an interface between the negative electrode 2 and the separator 3. That is, the interface between the electrodes 1, 2 and the separator 3 has a different adhesive force for each area so that the electrodes 1, 2 and the separator 3 are adhered with different strengths at various areas. A method of forming such a patterned adhesive force will be described in more detail with reference to the following drawings.

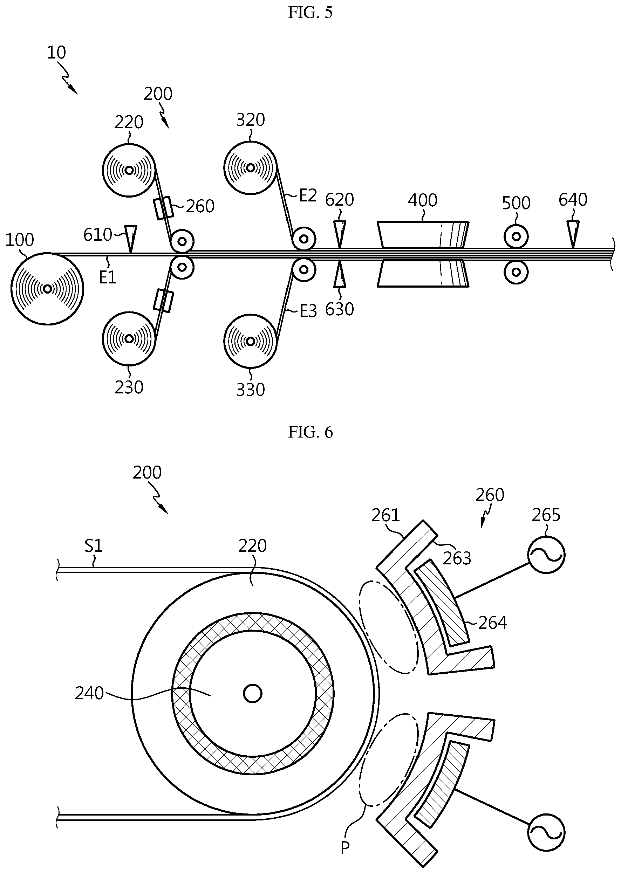

FIG. 5 is a schematic view illustrating a lamination system for a secondary battery for manufacturing a unit cell for a secondary battery according to the present disclosure.

Referring to FIG. 5, a lamination system 10 for a secondary battery may include a central electrode supply roller 100, a plasma processing apparatus 200, an upper electrode supply roller 320, a lower electrode supply roller 330, a heater unit 400, a lamination roller 500, and cutter units 610, 620, 630, 640.

The central electrode supply roller 100 may supply a central electrode E1 for unit cell manufacturing. To this end, the central electrode supply roller 100 is wound with the central electrode E1 in the form of a long fabric to supply the central electrode E1.

The plasma processing apparatus 200 for increasing adhesion, electrolyte impregnation, and gas discharge of a unit cell, which is a basic unit, may supply separators S1, S2 to both surfaces of the central electrode E1 and perform plasma treatment on surfaces of the separators S1, S2, to increase an adhesive force with the electrodes E1, E2, E3 through surface modification of the separators S1, S2.

Hereinafter, the plasma processing apparatus 200 of the lamination system 10 for a secondary battery will be described in more detail.

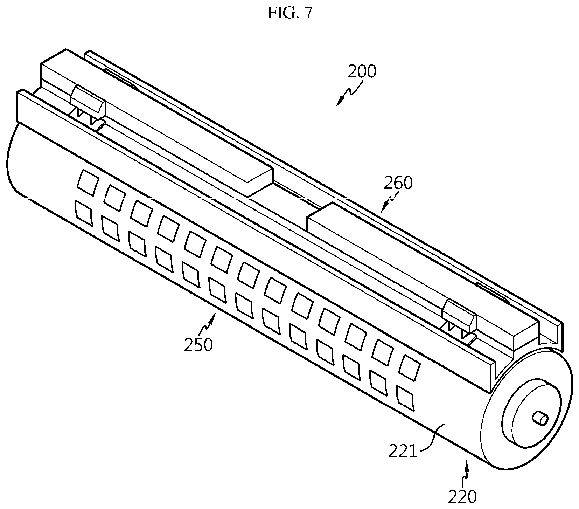

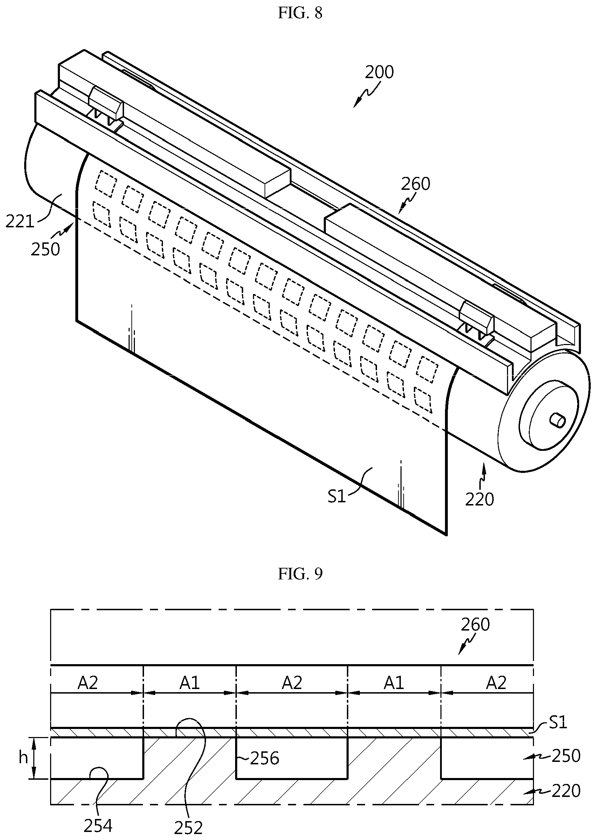

FIG. 6 is a view illustrating a plasma processing apparatus of the lamination system for a secondary battery of FIG. 5. FIG. 7 is a schematic perspective view illustrating the plasma processing apparatus of FIG. 6. FIG. 8 is a schematic perspective view illustrating a state where a separator passes through the plasma processing apparatus of FIG. 6. FIG. 9 is a cross-sectional view illustrating a main portion of the plasma processing apparatus of FIG. 8.

Referring to FIGS. 6 to 9, the plasma processing apparatus 200 may include discharge rollers 220, 230 that transport the separators S1, S2 of the unit cell for a secondary battery and in which a metal member 240 is provided, and a plasma processing member 260 that generates plasma through a mutual reaction with the metal member 240 and irradiates the plasma to surfaces of the separators S1, S2. A pattern portion 250 (see FIGS. 7 to 9) having a certain stepped portion may be formed on outer surfaces of the discharge rollers 220, 230.

Through the pattern portion 250 having the certain stepped portion formed on the outer surfaces of the discharge rollers 220, 230, in the plasma processing apparatus 200 according to the present embodiment, patterned plasma treatment may be performed so that plasma treatment is performed on some areas of the surfaces of the separators S1, S2 and plasma treatment is not performed on the remaining areas. That is, the plasma processing apparatus 200 may activate a uniform and patterned adhesive force on the surfaces of the separators S1, S2 so that the electrodes E1, E2, E3 and the separators S1, S2 are pattern-adhered.

The discharge rollers 220, 230 may include a first discharge roller 220 and a second discharge roller 230.

The first discharge roller 220 for transporting one separator S1 may include the metal member 240 therein. The second discharge roller 230 for transporting the other separator S2 may include the metal member 240 therein.

The plasma processing member 260 may be spaced apart from the separators S1, S2, and may generate plasma P through a mutual reaction with the metal member 240 and irradiate the plasma P to the surfaces of the separators S1, S2.

The plasma processing member 260 may include a processing member body 261, an electrode piece 264, and a switch 265.

The processing member body 261 may be spaced apart from each of the separators S1, S2, and may be provided in a width direction of the separators S1, S2. The processing member body 261 may be formed of a non-metallic material, and thus, may prevent resistance from occurring between the metal member 240 and the electrode piece 264. As a result, the plasma P may be stably generated between the metal member 240 and the processing member body 261.

The processing member body 261 may be formed of ceramic among non-metallic materials. The ceramic is a non-metal inorganic material obtained through a heat treatment process, has heat resistance, high strength, corrosion resistance, and is particularly light, thereby increasing the efficiency of use.

The electrode piece 264 may be a corona discharge electrode, and the plasma P may be stably generated between the metal member 240 and the processing member body 261 through the corona discharge electrode.

The electrode piece 264 may include a plurality of unit electrode pieces, and the plurality of unit electrode pieces may be connected along the width direction of the separators S1, S2 on the processing member body 261 to form one electrode piece 264, and thus, may be compatibly used for separators having various widths.

The plurality of unit electrode pieces may be spaced apart from each other along the width direction of the separators S1, S2 on the processing member body 261. Due to this feature, the plasma P may be partially generated between the metal member 240 and the processing member body 261 and as a result, a patterned adhesive force may be formed on the surfaces of the separators S1, S2.

The plurality of unit electrode pieces may have the same length, width, and thickness or may be different from each other in at least one of a length, width, and thickness. Accordingly, adhesive forces of various patterns may be formed on the surfaces of the separators S1, S2.

The processing member body 261 may have an insertion groove 263 that is formed long in the width direction of the separators S1, S2, and the electrode piece 264 may be inserted and fixed into the insertion groove 263. Accordingly, damage to the electrode piece 264 from an external object may be prevented and as a result, the plasma P may be stably generated.

The switch 265 may supply power to the electrode piece 264. The switch 265 may easily adjust whether to use the electrode piece 264 by controlling power supplied to the electrode piece 264, thereby preventing unnecessary power waste.

In the plasma processing member 260 constructed as described above, the plasma P may be generated as the metal member 240 and the electrode piece 264 correspond to each other, and an adhesive force is formed on the separators S1, S2 as the plasma P is irradiated to the surfaces of the separators S1, S2 between the metal member 240 and the electrode piece 264.

Hereinafter, a specific configuration and a related mechanism for forming a patterned adhesive force through the plasma processing apparatus 200 according to the present embodiment will be described in more detail.

The pattern portion 250 may be formed on a surface 221 of the discharge roller 220 and may be provided in a mosaic shape. Although not shown, the pattern portion 250 is also formed on a surface of the second discharge roller 230 that transports the other separator S2. In the following description, for convenience of explanation, the pattern portion 250 provided on the first discharge roller 220 corresponding to the one separator S1 will be mainly described.

The pattern portion 250 may include a contact portion 252 and a non-contact portion 254.

The contact portion 252 may be provided on the surface of the discharge roller 220, and may be in close contact with the separator S1 when the separator S1 is transported. There is a height difference corresponding to a certain depth h between the non-contact portion 254 and the contact portion 252, and the non-contact portion 254 may be spaced apart from the separator S1 by a certain distance.

To this end, the non-contact portion 254 may be recessed to the certain depth h from the outer surface 221 of the discharge roller 220. For example, a recess depth of the non-contact portion 254 may be about 2 mm.

The contact portion 252 and the non-contact portion 254 may be alternately arranged on the discharge roller 220, specifically, on the outer surface of the first discharge roller 220, to form a certain pattern on the surface of the discharge roller 220. The certain pattern may be provided in various ways according to a preset design condition according to a shape or a size of the separator S1.

For example, the contact portion 252 and the non-contact portion 254 may be provided in at least one of a longitudinal direction and a width direction of the discharge roller 220. Also, a plurality of contact portions 252 and a plurality of non-contact portions 254 may be provided. The plurality of contact portions 252 may be spaced apart from each other by a certain distance, and may have a preset separation distance. The plurality of non-contact portions 252 may be formed by etching from the outer surface 221 of the discharge roller 220, and may have a preset etch length, etch width, and etch depth. At least some of the plurality of non-contact portions 252 may have different etch lengths and etch widths.

Various patterns may be formed on the surface 221 of the discharge roller 220 according to various arrangements or shapes of the contact portion 252 and the non-contact portion 254, and thus, may be applied to the separators S1 having various sizes, and adhesive forces of various patterns may be formed according to a required design, etc.

The pattern portion 250 may include a connecting portion 256 that connects the contact portion 252 to the non-contact portion 254. The connecting portion 256 may guide the formation of an uneven pattern on the pattern portion 250 while connecting the contact portion 252 to the non-contact portion 254.

Accordingly, in the present embodiment, through the pattern portion 250 formed on the surface 221 of the first discharge roller 220, the separator S1 transported over the first discharge roller 220 may be divided into an area in close contact with the pattern portion 250 and an area spaced apart from the pattern portion 250. The area of the separator S1 in close contact with the pattern portion 250 may be an area located on the contact portion 252, and the area of the separator S1 spaced apart from the pattern portion 250 may be an area located on the non-contact portion 254.

Because the area of the separator S1 located on the contact portion 252 is in closer contact with the first discharge roller 220 than the area of the separator S1 located on the non-contact portion 254, when the plasma P is irradiated, the area of the separator S1 located on the contact portion 252 may have a smoother interaction with the metal member 240 to form an adhesive area with a high adhesion area. On the other hand, because the area of the separator S1 located on the non-contact portion 254 is spaced apart from the surface of the first discharge roller 220, when the plasma P is irradiated, the area of the separator S1 located on the non-contact portion 254 may have a weak interaction with the metal member 240 to form a non-adhesive area with a low adhesion area.

As such, when plasma of the plasma processing member 260 is irradiated through the pattern portion 250, an adhesive area A1 may be formed on a surface of the separator S1 located on the contact portion 252 and a non-adhesive area A2 may be formed on a surface of the separator located on the non-contact portion 254.

The adhesive area A1 and the non-adhesive area A2 may be alternately arranged, and thus, may have a patterned adhesive force of a mosaic shape in which the adhesive area A1 and the non-adhesive area A2 are alternately formed.

Accordingly, in the plasma processing apparatus 200 according to the present embodiment, there may be formed a mask having a patterned adhesive force as the adhesive area A1 and the non-adhesive area A2 are formed on the surfaces of the separators S1, S2, through the pattern portion 250 formed on the surfaces of the discharge rollers 220, 230.

Bonding between materials may be divided into chemical adhesion and mechanical interlocking. The improvement of an adhesive force by plasma treatment as in the present disclosure is a result of the reinforcement of a chemical adhesive force. The chemical adhesion may be divided into electrostatic attraction, chemical absorption, and chemical bonding. When a part of the surface of the separator S1 is treated with the plasma P as in the present disclosure, the area A1 treated with the plasma P is surface-modified to change, for example, a bonding structure such as C-H, C=C, and C-C into a bonding structure such as C-O, C=O, O-C-O, and O-C=O, which reinforces the electrostatic attraction, chemical absorption, and chemical bonding. On the other hand, the area A2 not treated with the plasma P has a relatively low adhesive force, which improves the impregnation of an electrolyte in the area.

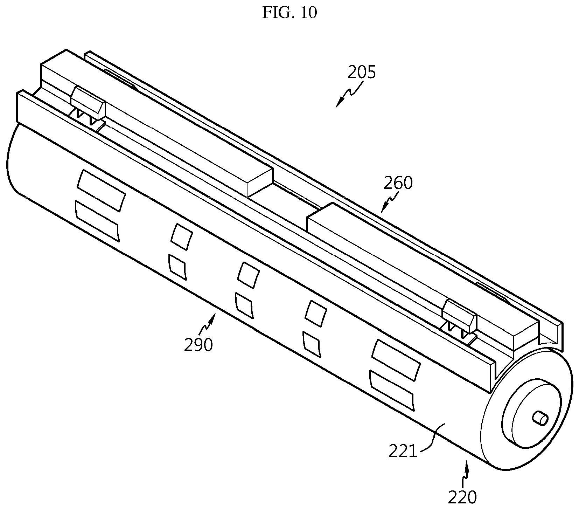

FIG. 10 is a view for describing a plasma processing apparatus according to another embodiment of the present disclosure.

A plasma processing apparatus 205 according to the present embodiment is similar to the plasma processing apparatus 200 of the above embodiment, and thus, elements that are substantially the same or similar as those in the above embodiment will be not repeatedly described and a difference from the above embodiment will be mainly described.

Referring to FIG. 10, in the plasma processing apparatus 205, as described above, a pattern portion 290 may be formed to have a different length, width, separation distance, and etch depth according to a preset design of a unit cell.

In detail, the pattern portion 290 may include a plurality of patterns having different lengths or widths. The plurality of patterns may be formed to have different recess depths.

As such, because the plasma processing apparatus 200 according to an embodiment of the present disclosure forms a certain stepped portion having a mosaic shape on surfaces of the discharge rollers 220, 230, uniform distribution plasma treatment may be performed through a longitudinal direction and a width direction of the separators S1, S2 to perform uniform mosaic pattern corona treatment, thereby significantly increasing adhesion, electrolyte impregnation, and gas discharge of the unit cell that is a basic unit.

In addition, because the plasma processing apparatus 200 according to an embodiment of the present disclosure may significantly increase gas discharge as described above, lithium plating may be effectively prevented.

Referring back to FIG. 5, the upper electrode supply roller 320 for supplying the upper electrode E2 in the form of a long fabric may supply the upper electrode E2 to the separators S1, S2 on which plasma treatment has been performed.

The lower electrode supply roller 330 for supplying the lower electrode E3 in the form of a long fabric may face the upper electrode supply roller 320 and may supply the lower electrode E3 to the separators S1, S2 on which plasma treatment has been performed.

The heater unit 400 for guiding adhesion of the separators S1, S2, the upper electrode E2, and the lower electrode E3 may heat the upper electrode E2 and the lower electrode E3 located on the separators S1, S2.

The lamination roller 500 may apply pressure to the upper electrode E2 and the lower electrode E3 adhered to the separators S1, S2 heated through the heater unit 400 to compress between each electrode and each separator.

The cutter units 610, 620, 630, 640 may cut each of the central electrode E1, the upper electrode E2, and the lower electrode E3 each in the supplied fabric form and the separators S1, S2 in a pre-determined manner.

The cutter units 610, 620, 630, 640 may include a first cutter 610, a second cutter 620, a third cutter 630, and a fourth cutter 640.

The first cutter 610 may cut the central electrode E1 to a certain size. The second cutter 620 may cut at least one of the upper electrode E2 and the separator S1, and the third cutter 630 may cut at least one of the lower electrode E3 and the separator S2. The fourth cutter 640 may cut each of the electrodes E1, E2, E3 and the separators S1, S2 so as to manufacture the unit cell for a secondary battery which is a basic unit.

Also, although not shown, a process of manufacturing the unit cell for a secondary battery may further include inspecting and discharging a completely laminated unit cell for a secondary battery.

The inspecting of the unit cell refers to inspecting whether there is a foreign material between the electrode and the separator and whether the unit cell is manufactured with an accurate size in a stacking process for manufacturing the unit cell.

As described above, in the unit cell for a secondary battery manufactured through any of the plasmas processing devices 200, 205, an adhesive force may not be uniformly formed but a patterned adhesive force may be formed, at an interface between the positive electrode 1 and the separator 3 and/or an interface between the negative electrode 2 and the separator 3. That is, the interface between the electrodes 1, 2 and the separator 3 has a different adhesive force for each area so that the electrodes 1, 2 and the separator 3 are adhered with different strengths at various areas.

Hereinafter, a result of an adhesive force measurement test through a plasma processing apparatus according to an embodiment of the present disclosure will be described with reference to the following drawings.

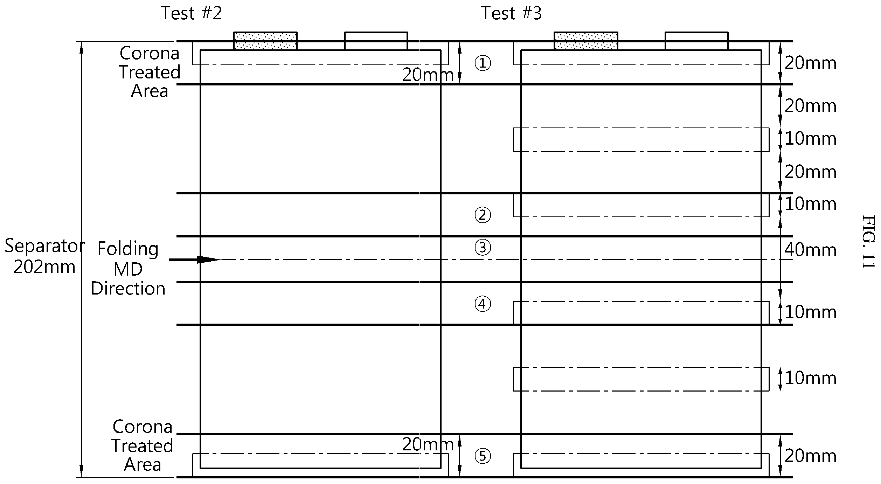

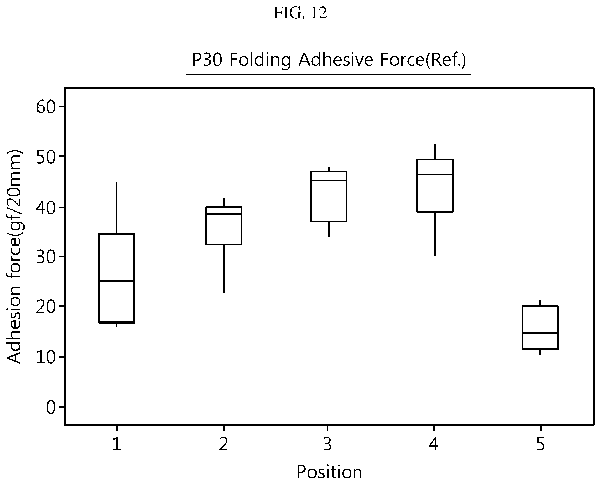

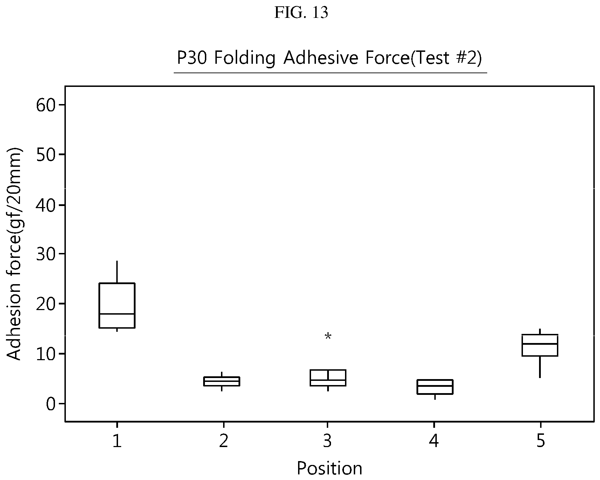

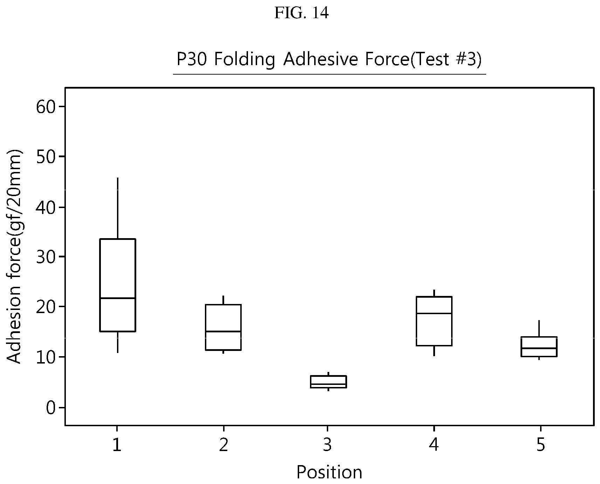

FIG. 11 is a view for describing an adhesive force measurement test through a plasma processing apparatus according to an embodiment of the present disclosure. FIGS. 12 to 15 are views for describing a result of the adhesive force measurement test of FIG. 11.

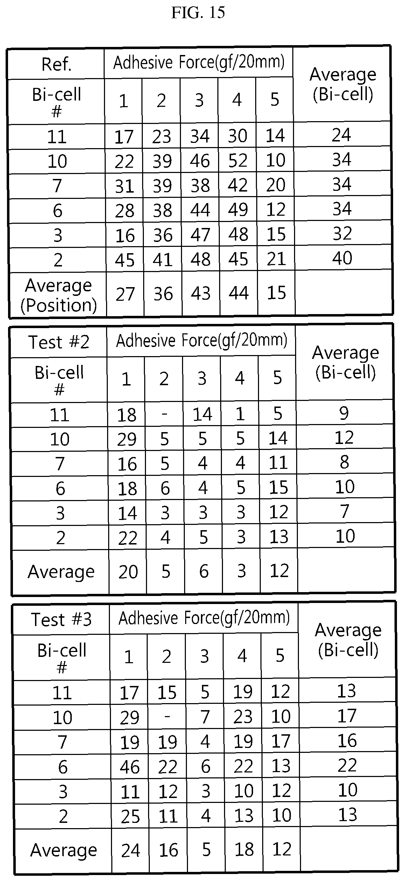

Referring to FIGS. 11 to 15, first, Reference (indicated by Ref. in FIGS. 12 and 15) corresponds to full corona treatment, and Test #2 and Test #3 correspond to mosaic corona treatment. FIG. 11 illustrates measurement of an adhesive force of a folding surface facing a negative electrode in Test #2 and Test #3 products. Adhesive force measurement positions are Positions 1 to 5 in the drawings, wherein a tap side corresponds to Position 1, central portions correspond to Position 2, Position 3, and Position 4, and a lower side corresponds to Position 5. In addition, in FIG. 11, a corona treated area, that is, a mosaic corona treated area is shown in a rectangular box shape. Bi-cell numbers 2, 3, 6, 7, 10, 11 shown in FIG. 15 are numbers of positions in a cell according to bi-cell stacking.

In FIG. 11, in the case of Test #2, mosaic corona treatment is performed in a total of two areas including the tab side (Position 1) and lower side (Position 5), and in the case of Test #3, mosaic corona treatment is performed in a total of six areas including the tab side (Position 1), the lower side (Position 5), and the central portions (Positions 2, 4), between the central portion (Position 2) and the tab side (Position 1), and between the central portion (Position 4) and the lower side (Position 5).

As shown in FIGS. 12 to 15, it is found that an adhesive force of a surface of a folding separator facing a negative electrode in a mosaic corona untreated area of Test #2 and Test #3 products is as low as about 5 gf. In Test #3, it is found that an adhesive force tends to be increased in Positions 2 and 4, that is, the central portions (Positions 2, 4) which are mosaic corona treated areas. It is found that an adhesive force is increased from about 5 gf to about 16 gf.

According to various embodiments of the present disclosure as described above, there may be provided the plasma processing apparatuses 200, 205 for improving wettability of an electrolyte by ensuring that there is an area having a weak adhesive force between an electrode and a separator or not bonded in a unit cell used in secondary battery manufacturing, and the lamination system 10 for a secondary battery including the plasma processing apparatuses 200, 205.

Also, according to various embodiments of the present disclosure as described above, there may be provided the plasma processing apparatuses 200, 205 for minimizing lithium plating by guiding smooth discharge of gas of a unit cell, and the lamination system 10 for a secondary battery including the plasma processing apparatuses 200, 205.

While one or more embodiments of the present disclosure have been described with reference to the embodiments and figures, the present disclosure is not limited thereto, and it will be understood by one of ordinary skill in the art that various changes in form and details may be made therein without departing from the scope of the present disclosure as defined by the following claims.

It will be understood by one of ordinary skill in the art that when terms indicating directions such as upper, lower, left, right, front, and rear are used, these terms are only for convenience of explanation and may vary according to a position of a target object, a position of an observer, etc.

## Claims

1. A plasma processing apparatus (200) for manufacture of a unit cell for a secondary battery, the plasma processing apparatus (200) comprising:
a discharge roller (220) configured to transport a separator (S1) of the unit cell for a secondary battery and including a metal member therein, a pattern portion (250) having a certain stepped portion is formed on an outer surface (221) of the discharge roller (220),; and
a plasma processing member (260) configured to generate plasma through a mutual reaction with the metal member (240) and irradiate the plasma to a surface of the separator (S1),
the plasma processing apparatus (200) being **characterized in that** the pattern portion (250) comprises a plurality of patterns having different lengths or width.

2. The plasma processing apparatus (200) according to claim 1, wherein the pattern portion (250) comprises:
a contact portion (252) closely in close contact with the separator (S1) when the separator (S1) is transported; and
a non-contact portion (254) having a height difference corresponding to a certain depth (h) from the contact portion (252) and spaced apart from the separator (S1) by a certain distance.

3. The plasma processing apparatus (200) according to claim 2, wherein, when plasma of the plasma processing member (260) is irradiated, an adhesive area (A1) is formed on a surface of the separator (S1) located on the contact portion (252), and a non-adhesive area (A2) is formed on a surface of the separator (S1, 3) located on the non-contact portion (254).

4. The plasma processing apparatus (200) according to claim 2, wherein the pattern portion (250) comprises a connecting portion (256) that connects the contact portion (252) to the non-contact portion (254).

5. The plasma processing apparatus (200) according to claim 2, wherein the contact portion (252) and the non-contact portion (254) are alternately arranged on the outer surface (221) of the discharge roller (220).

6. The plasma processing apparatus (200) according to claim 2, wherein the contact portion (252) and the non-contact portion (254) are provided in at least one of a longitudinal direction and a width direction of the discharge roller (220).

7. The plasma processing apparatus (200) according to claim 2, wherein the non-contact portion (254) is recessed to a certain depth (h) from the outer surface (221) of the discharge roller (220).

8. The plasma processing apparatus (200) according to claim 7, wherein a recess depth of the non-contact portion (254) is 2 mm.

9. The plasma processing apparatus according to claim 1, wherein the plurality of patterns have different recess depths.

10. The plasma processing apparatus (200) according to claim 1, wherein the pattern portion (250) is provided in a mosaic shape.

11. A lamination system (10) for a secondary battery comprising the plasma processing apparatus (200) according to claim 1.

## Patentansprüche

1. Plasmabearbeitungsvorrichtung (200) zur Herstellung einer Einheitszelle für eine Sekundärbatterie, wobei die Plasmabearbeitungsvorrichtung (200) umfasst: eine Entladungsrolle (220), die dazu ausgelegt ist, einen Separator (S1) der Einheitszelle für eine Sekundärbatterie zu transportieren, und die darin ein Metallelement einschließt, wobei ein Musterabschnitt (250) mit einem bestimmten abgestuften Abschnitt auf einer Außenfläche (221) der Entladungsrolle (220) ausgebildet ist; und
ein Plasmabearbeitungselement (260), das dazu ausgelegt ist, durch eine gegenseitige Reaktion mit dem Metallelement (240) Plasma zu erzeugen und das Plasma auf eine Oberfläche des Separators (S1) zu strahlen, wobei die Plasmabearbeitungsvorrichtung (200) **dadurch gekennzeichnet ist, dass** der Musterabschnitt (250) eine Vielzahl von Mustern mit unterschiedlichen Längen oder Breiten umfasst.

2. Plasmabearbeitungsvorrichtung (200) nach Anspruch 1, wobei der Musterabschnitt (250) umfasst: einen Kontaktabschnitt (252), der in engem Kontakt mit dem Separator (S1) steht, wenn der Separator (S1) transportiert wird; und einen kontaktfreien Abschnitt (254), der einen Höhenunterschied aufweist, der einer bestimmten Tiefe (h) vom Kontaktabschnitt (252) entspricht und vom Separator (S1) um einen bestimmten Abstand beabstandet ist.

3. Plasmabearbeitungsvorrichtung (200) nach Anspruch 2, wobei, wenn Plasma des Plasmabearbeitungselements (260) gestrahlt wird, ein Haftbereich (A1) auf einer Oberfläche des Separators (S1) ausgebildet wird, der sich auf dem Kontaktabschnitt (252) befindet, und ein nichthaftender Bereich (A2) auf einer Oberfläche des Separators (S1, 3) ausgebildet wird, der sich auf dem kontaktfreien Abschnitt (254) befindet.

4. Plasmabearbeitungsvorrichtung (200) nach Anspruch 2, wobei der Musterabschnitt (250) einen Verbindungsabschnitt (256) umfasst, der den Kontaktabschnitt (252) mit dem kontaktfreien Abschnitt (254) verbindet.

5. Plasmabearbeitungsvorrichtung (200) nach Anspruch 2, wobei der Kontaktabschnitt (252) und der kontaktfreie Abschnitt (254) abwechselnd auf der Außenfläche (221) der Entladungsrolle (220) angeordnet sind.

6. Plasmabearbeitungsvorrichtung (200) nach Anspruch 2, wobei der Kontaktabschnitt (252) und der kontaktfreie Abschnitt (254) in mindestens einer von einer Längsrichtung und einer Breitenrichtung der Entladungsrolle (220) vorgesehen sind.

7. Plasmabearbeitungsvorrichtung (200) nach Anspruch 2, wobei der kontaktfreie Abschnitt (254) auf eine bestimmte Tiefe (h) von der Außenfläche (221) der Entladungsrolle (220) vertieft ist.

8. Plasmabearbeitungsvorrichtung (200) nach Anspruch 7, wobei eine Vertiefungstiefe des kontaktfreien Abschnitts (254) 2 mm beträgt.

9. Plasmabearbeitungsvorrichtung nach Anspruch 1, wobei die Vielzahl von Mustern unterschiedliche Vertiefungstiefen aufweisen.

10. Plasmabearbeitungsvorrichtung (200) nach Anspruch 1, wobei der Musterabschnitt (250) in einer Mosaikform vorgesehen ist.

11. Laminiersystem (10) für eine Sekundärbatterie, umfassend die Plasmabearbeitungsvorrichtung (200) nach Anspruch 1.

## Revendications

1. Appareil de traitement au plasma (200) pour la fabrication d'une cellule unitaire pour une batterie secondaire, l'appareil de traitement au plasma (200) comprenant :
- un rouleau de décharge (220) configuré pour transporter un séparateur (S1) de la cellule unitaire pour une batterie secondaire et incluant un élément métallique à l'intérieur, une partie de motif (250) ayant une certaine partie étagée étant formée sur une surface extérieure (221) du rouleau de décharge (220) ; et
- un élément de traitement au plasma (260) configuré pour générer du plasma par une réaction mutuelle avec l'élément métallique (240) et pour irradier le plasma sur une surface du séparateur (S1),
l'appareil de traitement au plasma (200) étant **caractérisé en ce que** la partie de motif (250) comprend une pluralité de motifs ayant des longueurs ou des largeurs différentes.

2. Appareil de traitement au plasma (200) selon la revendication 1, dans lequel la partie de motif (250) comprend : une partie de contact (252) en contact étroit avec le séparateur (S1) lorsque le séparateur (S1) est transporté ; et une partie sans contact (254) ayant une différence de hauteur correspondant à une certaine profondeur (h) par rapport à la partie de contact (252) et espacée du séparateur (S1) d'une certaine distance.

3. Appareil de traitement au plasma (200) selon la revendication 2, dans lequel, lorsque le plasma de l'élément de traitement au plasma (260) est irradié, une zone adhésive (A1) est formée sur une surface du séparateur (S1) située sur la partie de contact (252), et une zone non adhésive (A2) est formée sur une surface du séparateur (S1, 3) située sur la partie sans contact (254).

4. Appareil de traitement au plasma (200) selon la revendication 2, dans lequel la partie de motif (250) comprend une partie de connexion (256) qui connecte la partie de contact (252) à la partie sans contact (254).

5. Appareil de traitement au plasma (200) selon la revendication 2, dans lequel la partie de contact (252) et la partie sans contact (254) sont agencées en alternance sur la surface extérieure (221) du rouleau de décharge (220).

6. Appareil de traitement au plasma (200) selon la revendication 2, dans lequel la partie de contact (252) et la partie sans contact (254) sont prévues dans au moins l'une d'une direction longitudinale et d'une direction de la largeur du rouleau de décharge (220).

7. Appareil de traitement au plasma (200) selon la revendication 2, dans lequel la partie sans contact (254) est en retrait d'une certaine profondeur (h) par rapport à la surface extérieure (221) du rouleau de décharge (220).

8. Appareil de traitement au plasma (200) selon la revendication 7, dans lequel une profondeur de retrait de la partie sans contact (254) est de 2 mm.

9. Appareil de traitement au plasma selon la revendication 1, dans lequel la pluralité de motifs a des profondeurs de retrait différentes.

10. Appareil de traitement au plasma (200) selon la revendication 1, dans lequel la partie de motif (250) est prévue sous une forme de mosaïque.

11. Système de laminage (10) pour une batterie secondaire comprenant l'appareil de traitement au plasma (200) selon la revendication 1.
